# EUROPEAN PATENT APPLICATION

(11) **EP 4 207 865 A1**
(43) Date of publication of application: **05.07.2023**
(21) Application number: 21861336.2
(22) Date of filing: 18.08.2021
(51) Int. Cl.: H04W 24/10, H04W 36/08

(54) **TERMINAL AND WIRELESS COMMUNICATION SYSTEM**

(30) Priority: 27.08.2020 JP 2020143259
(71) Applicant: NTT DOCOMO, INC., Tokyo 100-6150 (JP)
(72) Inventor: MIN, Tianyang, Tokyo 100-6150 (JP)
(74) Representative: Hoffmann Eitle
(86) International application number: PCT/JP2021/030152
(87) International publication number: WO 2022/044908

(57) **Abstract**

The UE 200 transmits a a report on handover to a target base station. When the UE 200 transmits the report when a configuration for measurement, satisfying handover condition, transmitting a measurement report, or a handover instruction is received.

## Description

### [Technical Field]

The present invention relates to terminals and radio communication system for transmitting reports on handovers.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

For example, extensions on data collection for Self-Organizing Networks (SON) and Minimization of Drive Tests (MDT) are being considered (Non-Patent Literature 1).

Considerations for such extensions include handover reports (Specifically, Successful Handover Reports) that are transmitted by the terminal (User Equipment, UE) to the handover destination radio base station (May be called target base station, target cell, etc.) and then to the handover source radio base station (May be called source base station, source cell, etc.).

### [Citation List]

### [Non-Patent Literature]

Non-Patent Literature 1: "Revised WID on enhancement of data collection for SON/MDT in NR and EN-DC," RP -201281, 3 GPP TSG RAN meeting #88-e, 3GPP, July 2020

### [Summary of Invention]

However, the content, timing, and conditions of reporting of Successful Handover Reports have not been clarified, and it is hoped that handover reports such as Successful Handover Reports will be transmitted effectively.

Therefore, the following disclosure has been made in view of this situation and is intended to provide a terminal and a radio communication system that can realize the transmission of effective reports on handovers.

One aspect of the disclosure is a terminal (UE 200) equipped with a transmission unit (handover reporting unit 230)that transmits a report on handover to a target base station, wherein the transmission unit transmits the report including at least one of an identifier of a cell at handover destination, configuration for monitoring a radio link at a source base station, a result of the monitoring, and configuration for the handover.

One aspect of the disclosure is a terminal (UE 200) equipped with an transmission unit ((handover reporting unit 230) that transmits a report on handover to a target base station, wherein the transmission unit transmits the report when a configuration for measurement, satisfying handover condition, transmitting a measurement report, or a handover instruction is received.

One aspect of the disclosure is provided with a transmission unit (handover reporting unit 230) that transmits a report on handover to a target base station, wherein the transmission unit transmits the report when a result of monitoring a radio link, operating status of a timer or a radio quality during a handover exceeds a certain threshold.

### [Brief Description of Drawings]

[Fig. 1]

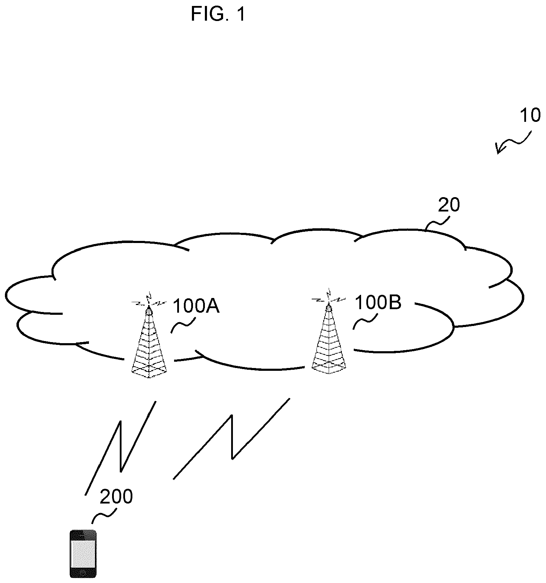

   Fig. 1 is an overall schematic diagram of radio communication system 10.
[Fig. 2]

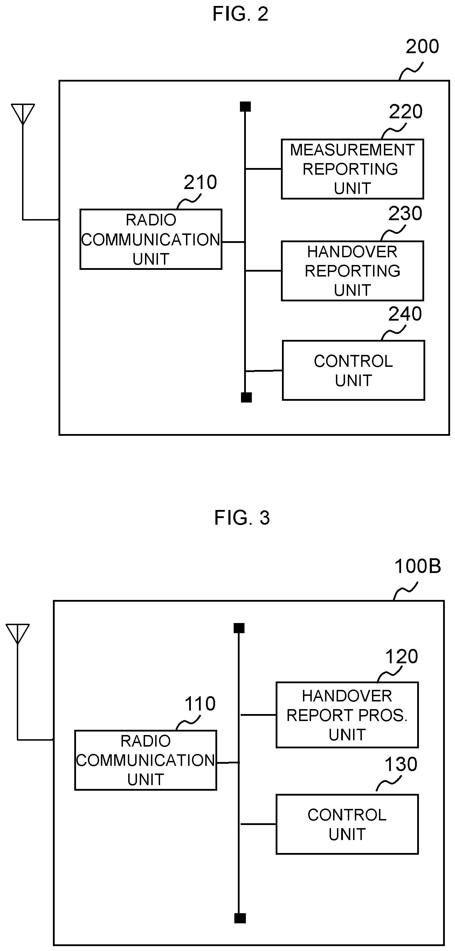

   Fig. 2 is a functional block diagram of the UE 200.
[Fig. 3]
   Fig. 3 is a functional block diagram of gNB 100 B.
[Fig. 4]

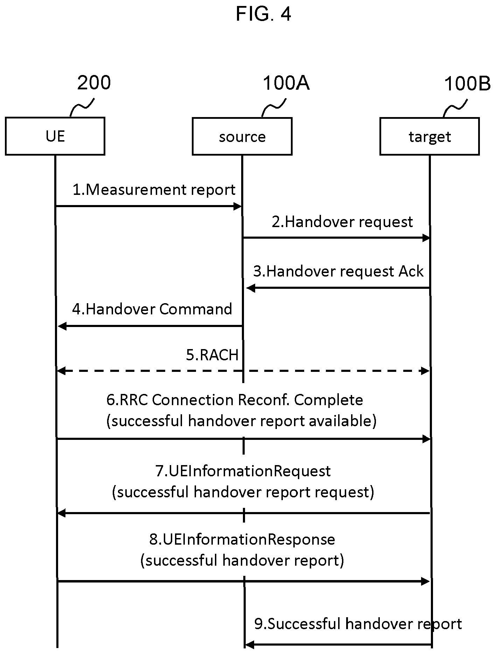

   Fig. 4 shows an example of a sequence of Successful Handover Reports.
[Fig. 5A]

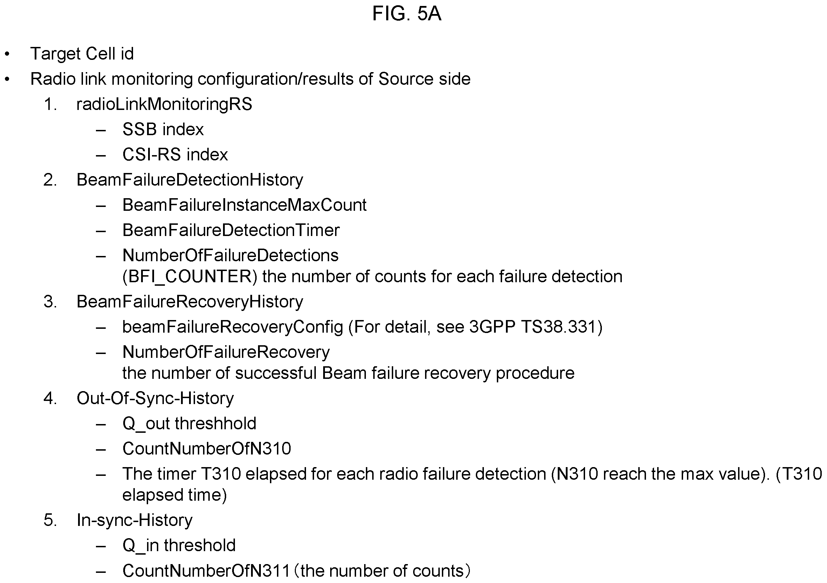

   Fig. 5A is an example (unit 1) of the content of the Successful handover Report.
[Fig. 5B]

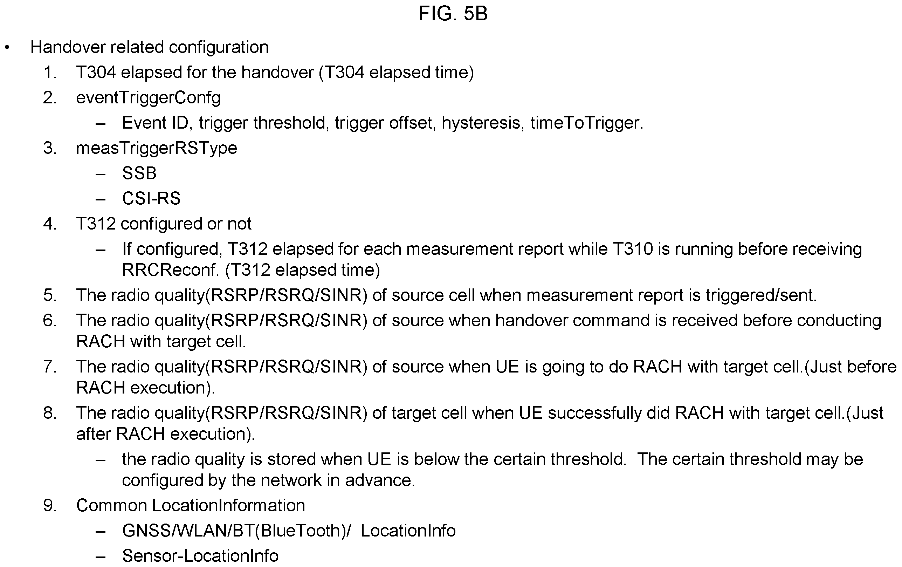

   Fig. 5B is an example of the content of the Successful handover Report (unit 2).
[Fig. 5C]

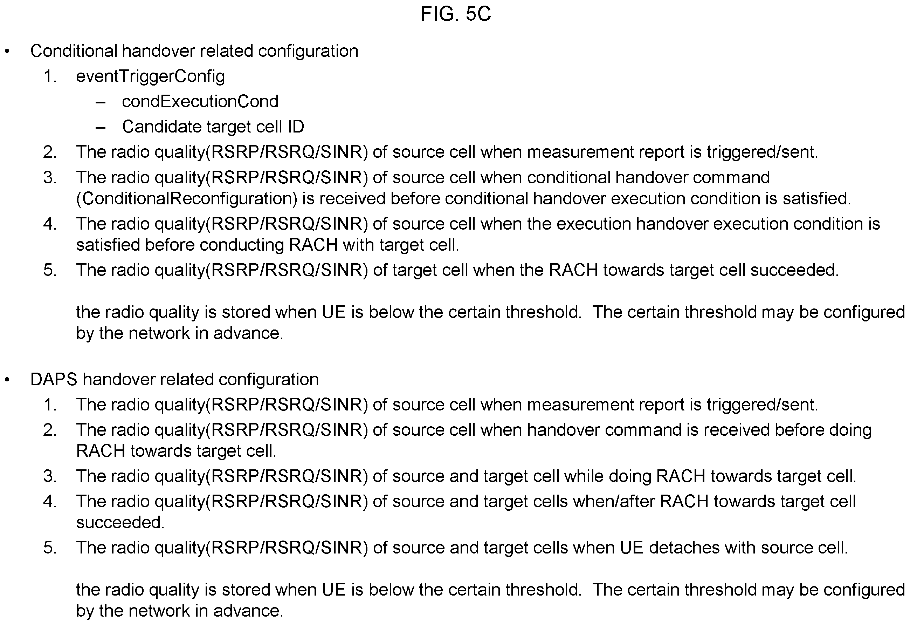

   Fig. 5C is an example of the content of the Successful handover Report (part 3).
[Fig. 6]

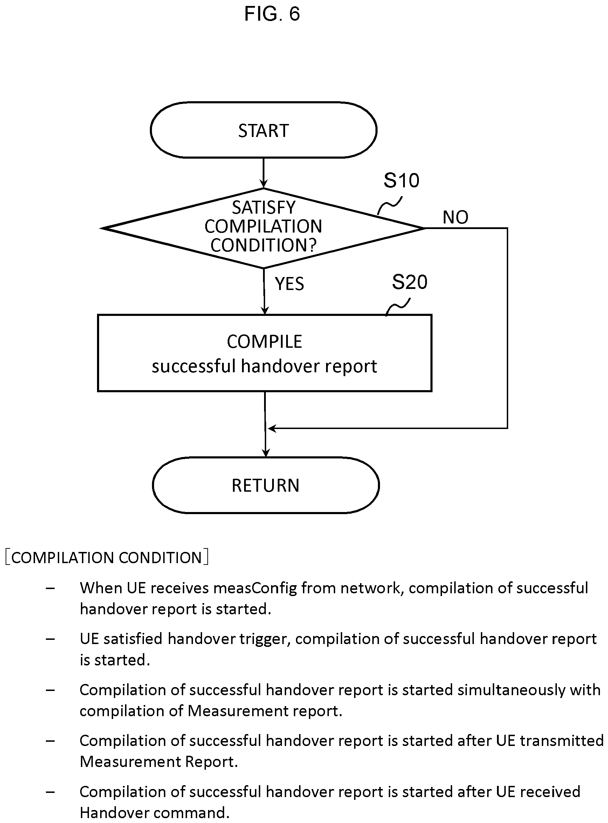

   Fig. 6 is a diagram showing the compilation operation flow of the Successful handover report by the UE 200.
[Fig. 7]

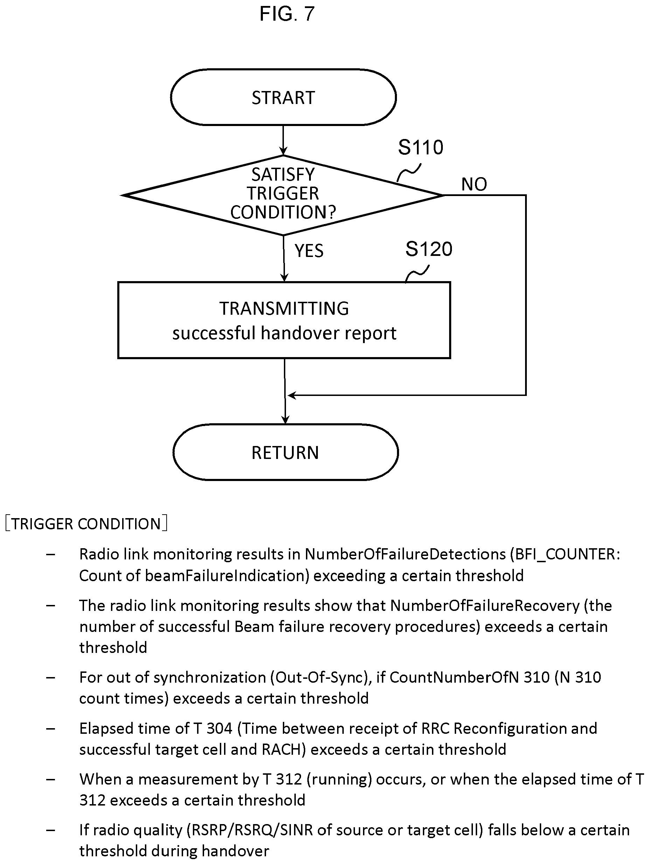

   Fig. 7 is a diagram showing the flow of the successful handover report transmission operation by the UE 200.
[Fig. 8]

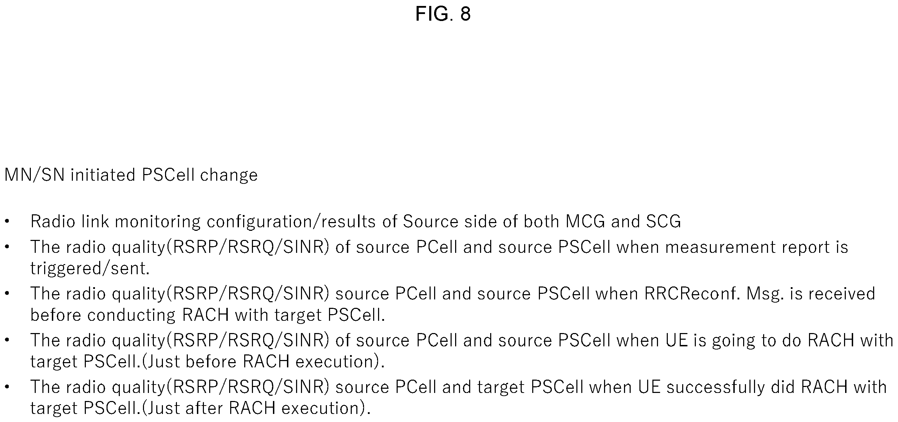

   Fig. 8 is an example of a Successful handover report that may additionally be included in the case of an MN/SN initiated PSCell change.
[Fig. 9]

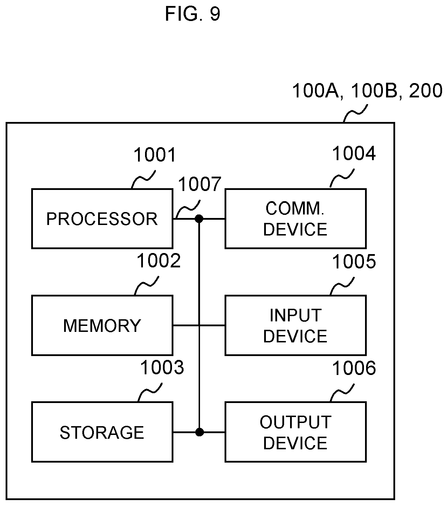

   Fig. 9 is a diagram showing an example of the hardware configuration of gNB 100 A, gNB 100 B and UE 200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

Fig. 1 is an overall schematic diagram of a radio communication system 10 according to the present embodiment. The radio communication system 10 is radio communication system according to 5G New Radio (NR) and includes Next Generation-Radio Access Network 20 (NG-RAN 20, and User Terminals 200 (User Equipment 200, hereinafter referred to as UE 200).

The radio communication system 10 may also be a radio communication system that follows a scheme called Beyond 5G, 5G Evolution or 6 G.

The NG-RAN 20 includes a radio base station 100 A (Below: gNB 100 A) and a radio base station 100 B (Hereinafter referred to as gNB 100 B). The specific configuration of radio communication system 10, including the number of gNBs and UEs, is not limited to the example shown in Fig. 1.

The NG-RAN 20 actually contains multiple NG-RAN nodes and is connected to a core network (5GC, not shown) that follows 5G. Note that NG-RAN 20 and 5GC may simply be described as "network."

The gNB 100 A and gNB 100 B are radio base stations (may simply be called a base station) in accordance with NR and perform radio communication with the UE 200 in accordance with NR. By controlling radio signals transmitted from multiple antenna elements, the gNB 100 A, gNB 100 B and UE 200 can support Massive MIMO for generating more directional beams, carrier aggregation (CA) for bundling multiple component carriers (CCs), and dual connectivity (DC) for simultaneously communicating between the UE and each of multiple NG-RAN nodes.

The gNB 100 A, gNB 100 B and UE 200 perform radio communication through a radio bearer, specifically an SRB Signalling Radio Bearer (SRB) or a Data Radio Bearer (DRB).

The UE 200 can also perform a handover from the gNB 100 A to gNB 100 B (or from gNB 100 B to gNB 100 A). A handover may be interpreted in the same way as a change, addition, etc. of a base station or cell accessed by a UE. Handover may also be referred to as cell reselection, cell transition, etc. Furthermore, handover, broadly defined, may include the addition or modification of cells (primary cell (PCell) or secondary cell (PSCell, SCell) included in a cell group (e.g., master cell group (MCG) or secondary cell group (SCG).

In addition, the UE 200 can send a report about the handover to the radio base station. Specifically, the UE 200 can send a report of a successful handover (For example, it could be called Successful Handover Reports) to the radio base station (target base station) at the handover destination. Note that the UE 200 may send a report on the handover to the radio base station (source base station) or the network of the handover source.

Also, Successful Handover Reports may be expressed in the singular as Successful handover report, etc., or may be referred to by another name, for example, simply as handover report, or may not be limited to successful handovers.

### (2)Function block configuration of radio communication system

Next, the functional block configuration of the radio communication system 10 will be described. Specifically, the functional block configurations of the gNB 100 B and UE 200 will be described.

### (2.1)UE200

Fig. 2 is a functional block diagram of the UE 200. As shown in Fig. 2, the UE 200 comprises a radio communication unit 210, a measurement reporting unit 220, a handover reporting unit 230 and a control unit 240.

The radio communication unit 210 transmits and receives radio signals in accordance with NR. Specifically, the radio communication unit 210 transmits an uplink signal (UL signal) in accordance with NR and receives a downlink signal (DL signal) in accordance with NR.

The radio communication unit 210 supports Massive MIMO, CA using multiple CCs bundled together, and DC performing simultaneous communication between UE and each of the 2 NG-RAN nodes.

The measurement reporting unit 220 can perform measurements on the quality of the UL and DL signals transmitted and received by the UE 200 and report the results of such measurements, etc.

In particular, in the present embodiment, the measurement reporting unit 220 can obtain the measurement (In other words, it can be called gathering QoE) based on the Minimization of Drive Test (MDT) that collects the Quality of Experience (QoE), and the quality related to the random access channel (RACH), the result of the random access procedure, etc., by notifying the network of the event (e.g. successful or unsuccessful radio disconnection or handover during communication) related to the Quality of Experience (QoE) from the UE 200. The report may be called the Measurement Report.

Although logged MDT measurement executed by the idle UE 200 in the radio resource control layer (RRC) and immediate MDT executed by the connected UE 200 exist in MDT, logged MDT measurement may be assumed in this embodiment. However, immediate MDT may be targeted.

The measurement reporting unit 220 may also measure the radio communication quality (reception quality) in the cell where the UE 200 is located (waiting) and in neighboring cell, and report the results of the measurement.

The handover reporting unit 230 executes a report on the handover of the UE 200. Specifically, the handover reporting unit 230 can transmit a report on handover to a target base station such as gNB 100 B. In this embodiment, the handover reporting unit 230 constitutes transmission unit.

The handover reporting unit 230 can transmit the report containing at least one of the cell identifier (cell ID) of the handover destination cell, the settings related to the monitoring of the radio link at the source base station, the results of the monitoring of the radio link, and the settings related to the handover.

The identifier (cell ID) of the cell to which the handover is directed may be called the target cell ID.

The settings for monitoring the radio link at the source base station may include the radio link monitoring reference signal (RS), beam fault recovery, out of synchronization, content for establishing synchronization, and monitoring results.

The settings for handover may include content for various timers (For example, T 304, T 312 (details will be described later).), radio communication quality (Examples include Reference Signal Received Power (RSRP), Reference Signal Received Quality (RSRQ), Signal-to-Interference plus Noise power Ratio (SINR)), and location information for the UE 200.

In addition, handover settings may include conditional handover (CHO), handover content using dual active protocol stack (DAPS).

Further details will be described later.

The handover reporting unit 230 may include such handover reports in messages sent from the UE 200 to the target base station. For example, the report may be included in the UEInformationResponse.

Also, as described above, the report may be transmitted to the source base station or network. The source base station receiving the report may relay the report to the target base station.

The handover report may be included in a measurement report sent to the source base station or in other messages sent to the target base station (For example, RRC Reconfiguration Complete).

If the handover reporting unit 230 receives a setting for measurement, satisfies the handover condition, sends a measurement report, or receives a handover instruction, it may send a report on the handover as described above.

Setting for measurement may mean measConfig as specified in 3 GPP TS 38.331, etc. However, it is not necessarily limited to measConfig, but may be a setting related to MDT.

The handover condition may be, for example, a condition specified in Section 5.5.4 of 3 GPP TS 38.331 (which may be called a handover trigger condition), but it may be any other condition as long as it can trigger a handover.

Transmission of a measurement report may mean, for example, transmission of a measurement report, but may include any measurement in the UE 200, such as transmission of the results of an MDT.

Receiving a handover instruction may also mean receiving a handover command, but may include any instruction that triggers another direct or indirect handover initiation.

The handover reporting unit 230 may send a report on handover when, as a result of monitoring the radio link, the operating status of various timers or the radio quality during the handover exceeds a certain threshold.

The results of monitoring the radio link may include the radio link between the source or target base station and the UE 200. The results of monitoring the radio link may include the results of monitoring with respect to the beam (such as beam failure).

The various timers may include T 304, T 312 (details will be provided later) as described above.

Radio quality during handover may include RSRP, RSRQ and SINR. The threshold may be predefined in the UE 200 or may be set by an instruction from the network.

The control unit 240 controls each functional block comprising the UE 200. In particular, in this embodiment, the control unit 240 performs control over the handover of the UE 200.

Specifically, the control unit 240 determines whether a handover is necessary based on the measurement results by the measurement reporting unit 220, and executes the handover when the handover conditions are satisfied.

When executing a handover, the control unit 240 controls the handover reporting section 230 to transmit a report on the handover to the radio base station. Specifically, the control unit 240 can control the content, timing and conditions of such reporting.

In this embodiment, the channel includes a control channel and a data channel. Control channels include PDCCH (Physical Downlink Control Channel), PDCCH (Physical Uplink Control Channel), PRACH (Physical Random Access Channel), and PBCH (Physical Broadcast Channel).

Data channels include PDSCH (Physical Downlink Shared Channel) and PUSCH (Physical Uplink Shared Channel).

Reference signals include Demodulation reference signal (DMRS), Sounding Reference Signal (SRS), Phase Tracking Reference Signal (PTRS), and Channel State Information-Reference Signal (CSI-RS), and signals include channel and reference signals. Data may also mean data transmitted over a data channel.

### (2.2)gNB100B

Fig. 3 is a functional block diagram of gNB 100 B. As shown in Fig. 3, the gNB 100 B comprises a radio communication unit 110, a handover report processing unit 120 and a control unit 130. The gNB 100 A may have the same functional block configuration as the gNB 100 B. Here, a case where the gNB 100 B serves as a target base station for handover is described as an example.

The radio communication unit 110 transmits and receives radio signals in accordance with NR. Specifically, the radio communication unit 110 receives an uplink signal (UL signal) in accordance with NR and transmits a downlink signal (DL signal) in accordance with NR.

The handover report processing unit 120 executes processing of a report on handover of the UE 200. Specifically, the handover report processing unit 120 acquires the content of the report transmitted from the UE 200.

More specifically, the handover report processing unit 120 can request a handover report toward the UE 200. For example, the request may be included in a UEInformationRequest, which is an RRC layer message sent to the UE 200. If the UE 200 notifies the handover report processor 120 that it can provide a handover report, the handover report processor may send the request.

A notification that a UE 200 can provide a report on handovers may be included in the RRC Reconfiguration Complete, for example.

The handover report processing unit 120 can obtain messages in the RRC layer, for example, the handover reports contained in the UEInformationResponse (or RRC Reconfiguration Complete) (Successful Handover Reports).

The handover report processing unit 120 may transmit (may be described as relaying, transferring or providing) the report to the source base station (gNB 100 A) under the control of the control unit 130. The content of the report sent to the source base station may be a part or all of the content received from the UE 200.

The control unit 130 controls each functional block comprising the gNB 100 B. In particular, in this embodiment, the control unit 130 cooperates with the gNB 100 A (source base station) to perform control over the handover of the UE 200.

Specifically, the control unit 130 receives a handover request from the source base station and can return a positive response (Handover request Ack.) if it can handle the handover.

The control unit 130 can also perform random access (RA) procedures with the UE 200 and send handover reports obtained from the UE 200 to the source base station.

### (3)Operation of radio communication system

Next, operation of the radio communication system 10 will be described. Specifically, reporting behavior for handovers for the purposes of Self-Organizing Networks (SON)/Minimization of Drive Tests (MDT) will be described.

Release-17 of 3GPP considers expansion of data collection for SON/MDT. Considerations for such expansion include support for data collection for SON, including Coverage and Capacity Optimization (CCO), and reports for handover (Successful Handover Reports).

### (3.1) Example of a sequence of handover reports

Fig. 4 shows an example sequence of Successful Handover Reports.

Specifically, Fig. 4 shows the reporting sequence of Successful Handover Reports when the UE 200 handovers from gNB 100 A (source base station) to gNB 100 B (target base station).

As shown in Fig. 4, the UE 200 can include information indicating that it is available to provide a Successful handover Report to the RRC Reconfiguration Complete after performing random access procedures through gNB 100 B and RACH (step 6).

The gNB 100 B may include in the UEInformation Request a Successful handover Report request requesting the transmission of a Successful handover Report based on the relevant information (Successful handover Report available) (step 7).

The UE 200 may include a Successful handover Report in the UE Information Response based on the request (Successful handover Report request) (step 8).

The gNB 100 B can send part or all of the received Successful handover report to the gNB 100 A (step 9).

### (3.2) Example of operation

Next, a working example of UE 200 for the Successful handover report is described. Specifically, the following operation examples will be described.
▪(Operation Example 1): Regarding the contents of the Successful handover Report
▪(working example 2): on when to start compiling the Successful handover report
▪(Operation Example 3): Regarding the reporting trigger of the Successful handover report

### (3.2.1) Operation Example 1

A Successful handover Report may contain at least one of the following contents: Figs 5A, 5B and 5C illustrate the content of the Successful handover report.
▪Target Cell id
▪Source base station side radio link monitoring settings and monitoring results

1. Reference signal for radio link monitoring (radioLinkMonitoringRS)
   - Synchronization signal block (SSB index (SS/PBCH Block))
   - CSI-RS index
2. Beam Failure Detection History
   - Maximum count of beam failure events (BeamFailureInstanceMaxCount)
   - Beam Failure Detection Timer
   - Number of failure detections
   (NumberOfFailureDetections)
   (BFI_COUNTER): Beam failure count per failure detection
3. Beam Failure Recovery History
   - Beam failure recovery configuration (beamFailureRecoveryConfig (see 3 GPP TS 38.331))
      The information element (IE) BeamFailureRecoveryConfig may be used to configure the UE 200 with RACH resources and candidate beams for beam failure recovery if a beam failure is detected (see also Chapter 3 GPP TS 38.321 5.1.1).
   - Beam failure recovery count (NumberOfFailureRecovery)
   Number of times beam failure recovery procedure was successful
4. out of synchronization History (Out-Of-Sync-History)
   - Q_out threshold
   - Counts (CountNumberOfN 310)
   - Timer T 310 elapsed for each radio fault detection (N 310 reached maximum) (The timer T 310 elapsed for each radio failure detection (N 310 reach the max value))

N 310 may be reset at the start of the connection reestablishment procedure when it receives a "synchronizing" instruction from the lower layer, when it receives RRCReconfiguration with reconfigurationWithSync for that cell group, and it may be increased when it receives a "out of synchronization (asynchronous)" from the lower layer when timer T 310 is stopped, and timer T 310 may be started when the maximum value is reached.

T 310 may be stopped when it detects a problem in the physical layer of the Special Cell (SpCell), that is, when it receives N 310 consecutive synchronous indications from the lower layer, when it receives N 311 consecutive synchronous indications from the lower layer of the SpCell, when it receives RRCReconfiguration with reconfigurationWithSync for the cell group in question, when it receives MobilityFromNRCommand, when it reconfigures rlf-TimersAndConstant, when it starts the connection reestablishment procedure, when it starts the MCG failure information procedure, and when it releases the SCG.

### 5. In-sync-History

- Q_in threshold
- Counts (CountNumberOfN 311)

N 311 may be reset at the start of the connection reestablishment procedure when it receives an instruction for "out of synchronization" from the lower layer, when it receives RRCReconfiguration with reconfigurationWithSync for that cell group, and it may be increased when it receives an "In-sync" from the lower layer during the execution of timer T 310 and stop timer T 310 when the maximum value is reached.

### ▪Handover related configuration

1. T 304 elapsed time (T 304 elapsed for the handover)
   Timer T 304 may be started when a RRCReconfiguration message containing reconfigurationWithSync is received or when a conditional reconfiguration is performed, that is, when a stored RRCReconfiguration message containing reconfigurationWithSync is applied, and stopped upon successful completion of random access in the corresponding SpCell.
2. eventTriggerConfg
   - Event ID, trigger threshold, trigger offset, hysteresis, timeToTrigger.
3. measTriggerRSType
   - SSB
   - CSI-RS
4. Timer T 312 configured or not
   - T 312 elapsed time (If configured, T 312 evolved for each measurement report while T 310 is running before receiving RRC Reconfiguration)

T 312 is initiated if T 312 is configured in MCG, during PCell's T 310 run, T 312 is configured and triggers a measurement report with a measurement ID of "useT 312" set to true, and

If T 312 is configured with SCG and "useT 312" is set to true, it may be started if, during the execution of T 310 in PSCell, T 312 triggers a measurement report of the configured measurement ID.

The T 312 may also be stopped when it receives an N 311 continuous synchronization indication from a lower layer of the SpCell, when it receives an RRCReconfiguration with reconfigurationWithSync of the cell group in question, when it starts a connection reestablishment procedure, when it reconfigures rlf-TimersAndConstant, when it starts an MCG failure information procedure, and when the T 310 expires in the corresponding SpCell.
5. Radio quality of source cell when triggering/sending measurement report (The radio quality (RSRP/RSRQ/SINR) of source cell when measurement report is triggered/sent)
6. Radio quality of the source cell when the Handover command is received (The radio quality (RSRP/RSRQ/SINR) of source when handover command is received before conducting RACH with target cell)
7. Radio quality of source cell during RA procedure execution (The radio quality (RSRP/RSRQ/SINR) of source when UE is going to do RACH with target cell (Just before RACH execution))
8. Radio quality of the target cell after RA procedure (The radio quality (RSRP/RSRQ/SINR) of target cell when UE successfully did RACH with target cell.)

The radio quality may be recorded when it falls below a certain threshold, which may be set from the network in advance.

### 9. Common Location Information

- GNSS/WLAN/BT(Bluetooth)/ LocationInfo
- Sensor-LocationInfo
   ▪Conditional handover related configuration (The following may be added to the content shown in Figs 5A, 5B and 5C)

1. eventTriggerConfig
   - condExecutionCond
   - Candidate target cell ID
2. Radio quality of source cell when triggering/sending measurement report (The radio quality (RSRP/RSRQ/SINR) of source cell when measurement report is triggered/sent)
3. Radio quality of the source cell when a Conditional Handover command is received (The radio quality (RSRP/RSRQ/SINR) of source cell when conditional handover command (Conditional Reconfiguration) is received before conditional handover execution condition is satisfied.)
4. Radio quality of source cell when handover condition is satisfied (The radio quality (RSRP/RSRQ/SINR) of source cell when the execution handover execution condition is satisfied before conducting RACH with target cell)
5. Radio quality of the target cell during RA procedure execution (The radio quality (RSRP/RSRQ/SINR) of target cell when the RACH towards target cell succeeded)

The radio quality may be recorded when it falls below a certain threshold, which may be set from the network in advance.

### ▪DAPS handover related configuration (The following may be added to the content shown in Figs 5A, 5B and 5C)

1. Radio quality of source cell when triggering/sending measurement report (The radio quality (RSRP/RSRQ/SINR) of source cell when measurement report is triggered/sent)
2. Radio quality of the source cell when the Handover command is received (The radio quality (RSRP/RSRQ/SINR) of source cell when handover command is received before doing RACH towards target cell)
3. Radio quality of source and target cells during RA procedure execution (The radio quality (RSRP/RSRQ/SINR) of source and target cell while doing RACH towards target cell)
4. Radio quality of source and target cells during or after RA procedure (The radio quality (RSRP/RSRQ/SINR) of source and target cells when/after RACH towards target cell succeeded)
5. Radio quality when UE disconnects source cell (The radio quality (RSRP/RSRQ/SINR) of source and target cells when UE detaches with source cell)

The radio quality may be recorded when it falls below a certain threshold, which may be set from the network in advance.

### (3.2.2) Operation Example 2

C shows the compilation operation flow of the Successful handover report by UE 200. As shown in Fig. 6, the UE 200 determines whether the compilation conditions of the Successful handover Report are satisfied (S 10).

Compilation may be interpreted as generating and sending a Successful handover Report and collecting the contents of the Successful handover Report, and more broadly, as reporting a Successful handover Report.

The UE 200 may begin compiling the Successful handover Report if any of the following compilation conditions are met (S 20):

▪When UE receives measConfig from network
▪UE satisfied handover trigger condition

The handover trigger condition is specified in Chapter 3 GPP TS 38.331 5.5.4 as follows:
"if the reportType is set to eventTriggered and if the entry condition applicable for this event, i.e. the event corresponding with the eventId of the corresponding reportConfig within VarMeasConfig, is fulfilled for one or more applicable cells for all measurements after layer 3 filtering taken during timeToTrigger defined for this event within the VarMeasConfig."
▪When UE starts compiling Measurement Report
▪When UE sends Measurement Report
▪When UE receives Handover command

Note that the timing at which the UE 200 actually starts compiling the Successful handover report need not necessarily be the same as the timing described above, and some delay may be allowed.

### (3.2.3) Example 3

Fig. 7 shows the operational flow of sending the Successful handover report by the UE 200. As shown in Fig. 7, the UE 200 determines whether the trigger condition for the transmission of the Successful handover Report is satisfied (S 110).

The trigger for the transmission of the Successful handover Report may be interpreted as a trigger that determines the transmission of the Successful handover Report available or the transmission of the Successful handover Report itself.

The UE 200 may send a Successful handover Report if any of the trigger conditions shown below is satisfied (S 120). As noted above, the RRC Reconfiguration Complete may include the Successful handover Reportavailable, the UEInformationResponse may include the Successful handover Report, and the Successful handover Report available may include the Successful handover Report.
▪Radio link monitoring results in NumberOfFailureDetections (BFI_COUNTER: Count of beamFailureIndication) exceeding a certain threshold
BFI_COUNTER is specified in Chapter 5.17 of 3 GPP TS 38.321 and is provided for each serving cell to count the number of beam faults detected.
▪The radio link monitoring results show that NumberOfFailureRecovery (the number of successful Beam failure recovery procedures) exceeds a certain threshold.
▪For out of synchronization (Out-Of-Sync), if CountNumberOfN 310 (N 310 count times) exceeds a certain threshold
▪Elapsed time of T 304 (Time between receipt of RRC Reconfiguration and successful target cell and RACH) exceeds a certain threshold
▪When a measurement by T 312 (running) occurs, or when the elapsed time of T 312 exceeds a certain threshold
▪If radio quality (RSRP/RSRQ/SINR of source or target cell) falls below a certain threshold during handover

The threshold may be set from the network in advance.

### (4)Operational effects

According to the above embodiment, the following working effects can be obtained. Specifically, the UE 200 may send a handover report, specifically, a Successful handover Report, to the target base station, which may include at least one of the cell identifiers of the handover destination, the settings for monitoring the radio link at the source base station, the results of such monitoring, and the settings for handover.

Thus, the UE 200 can include events such as failures experienced during the handover process in the Successful handover report, which is eventually fed back to the source base station. That is, the UE 200 may realize effective handover reporting.

The source base station can also be expected to improve mobility robustness by adjusting the mobility and radio link configuration parameters of the UE 200.

In this embodiment, the UE 200 can send a Successful handover report when it receives settings related to measurement, satisfies handover conditions, sends a measurement report, or receives a handover instruction. This allows the successful handover report to be provided to the network at an appropriate time that can improve mobility robustness.

The UE 200 can also send a Successful handover report when radio link monitoring results, timer activity, or radio quality during handover exceeds a certain threshold. Thus, it is possible to maintain good radio communication status of the UE 200.

### (5)Other Embodiments

Although the contents of the present invention have been described by way of the embodiments, it is obvious to those skilled in the art that the present invention is not limited to what is written here and that various modifications and improvements thereof are possible.

For example, the content of the Successful handover Report described above may be applied to the MN/SN initiated PSCell addition/change. Specifically, the illustration of the content of the Successful handover Report shown in Figs 5A, 5B and 5C may be applied to the MN/SN initiated PSCell addition/change.

Also, in the case of SN initiated PSCell change, the UE 200 may send a Successful handover Report to the master node (MN) using ULInformationTransferMRDC message and the MN may send it to the secondary node (SN) using RRC Transfer.

In addition, in the case of an MN/SN initiated PSCell change, in addition to the content of the Successful handover Report shown in Figs 5A, 5B and 5C, the following content may be included in the Successful handover Report: Fig. 8 is an example of a Successful handover Report that may additionally be included in the case of an MN/SN initiated PSCell change.
▪Monitoring configuration and monitoring results for radio links at both MCG and SCG source base stations
▪Radio quality of source PCell/source PSCell when triggering/sending Measurement Report (The radio quality (RSRP/RSRQ/SINR) of source PCell and source PSCell when measurement report is triggered/sent)
▪Radio quality of source PCell/source PSCell when RRC Reconfiguration is received (The radio quality (RSRP/RSRQ/SINR) source PCell and source PSCell when RRC Reconfiguration Msg.is received before conducting RACH with target PSCell)
▪Radio quality of source PCell/source PSCell during RA procedure execution (The radio quality (RSRP/RSRQ/SINR) of source PCell and source PSCell when UE is going to do RACH with target PSCell.)
▪Radio quality of source PCell/target PSCell after RA procedure (The radio quality (RSRP/RSRQ/SINR) source PCell and target PSCell when UE successfully did RACH with target PSCell.)

The radio quality may be recorded when it falls below a certain threshold, which may be set from the network in advance.

As mentioned above, the Successful Handover Report and the Successful Handover Reports may be referred to by different names as long as the reports contain content related to the handover of the UE 200.

In addition, the block configuration diagrams (Figs. 2 and 3) used for the explanation of the above described embodiment show blocks of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that makes transmission work is called a transmitting unit (transmission unit) or transmitter. In either case, as described above, the implementation method is not particularly limited.

Furthermore, the aforementioned gNB 100 A, gNB 100 B and UE 200 (such devices) may function as computers to perform processing of the radio communication method of this disclosure. Fig. 9 shows an example of the hardware configuration of the device. As shown in Fig. 9, the device may be configured as a computer device including a processor 1001, a memory 1002, a storage 1003, an communication device 1004, an input device 1005, an output device 1006 and a bus 1007, etc.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see Figs 2 and 3) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001, for example, operates an operating system to control the entire computer. The processor 1001 may consist of a central processing unit (CPU) including interfaces to peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, etc. The memory 1002 can store programs (program code), software modules, etc., that can execute a method according to one embodiment of this disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. Bus 1007 may be configured using a single bus or different buses between devices.

In addition, the device may include hardware such as a microprocessor, a digital signal processor (DSP), an application-specific integrated circuit (ASIC), a programmable logic device (PLD), or a field programmable gate array (FPGA), which may implement some or all of the functional blocks. For example, the processor 1001 may be implemented by using at least one of these hardware.

In addition, notification of information is not limited to the mode/embodiment described in this disclosure and may be made using other methods. For example, notification of information may be performed by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. The RRC signaling may also be referred to as an RRC message, for example, an RRC Connection Setup message, an RRC Connection Reconfiguration message, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative sequence to present elements of various steps and is not limited to the specific sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in this disclosure may be used alone, in combination, or switched over as practice progresses. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, airplanes, etc.), an unmanned mobile body (For example, drones, self-driving cars, etc.) or a robot (manned or unmanned). At least one of a base station and a mobile station can be a device that does not necessarily move during the communication operation. For example, at least one of a base station and a mobile station may be an Internet of Things (IoT) device such as a sensor.

In addition, base stations in this disclosure may be read as mobile stations (user terminal, hereinafter the same). For example, each aspect/embodiment of this disclosure may be applied to a configuration in which communication between a base station and a mobile station is replaced by communication between multiple mobile stations (For example, it may be called Device-to-Device (D2D), Vehicle-to-Everything (V2X), etc.). In this case, the mobile station may have the function of the base station. In addition, phrases such as "up" and "down" may be replaced with phrases corresponding to communication between terminals (For example, "side"). For example, terms an uplink channel, a downlink channel, or the like may be read as a side channel.

Similarly, mobile stations in this disclosure may be read as base stations. In this case, the base station may have the function of the mobile station.

A radio frame may be composed of one or more frames in the time domain.

Each frame or frames in the time domain may be referred to as a subframe.

A subframe may be further configured by one or more slots in the time domain. The subframe may have a fixed length of time (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. A PDSCH (or PUSCH) transmitted in units of time larger than a minislot may be called a PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframes and TTI may be a subframe (1 ms) in an existing LTE, may have a duration shorter than 1 ms (For example, 1 -13 symbols), or may have a duration longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. In addition, the number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain.

The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (SubCarrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be identified by an index of RBs relative to the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "determination" may include regarding some action as "judgment" and "determination." Moreover, "judgment (decision)" may be read as "assuming," "expecting," "considering," and the like.

In the present disclosure, the term "A and B are different" may mean "A and B are different from each other." It should be noted that the term may mean "A and B are each different from C."
Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
100A, 100B gNB
110 radio communication unit
120 handover report processing unit
130 control unit
200 UE
210 radio communication unit
220 measurement reporting unit
230 handover reporting unit
240 control unit
1001 processors
1002 memory
1003 storage
1004 communication device
1005 input Device
1006 output Device
1007 bus

## Claims

1. A terminal comprising:
a transmission unit that transmits a report on handover to a target base station, wherein
the transmission unit transmits the report including at least one of an identifier of a cell at handover destination, configuration for monitoring a radio link at a source base station, a result of the monitoring, and configuration for the handover.

2. A terminal comprising:
a transmission unit that transmits a report on handover to a target base station, wherein
the transmission unit transmits the report when a configuration for measurement, satisfying handover condition, transmitting a measurement report, or a handover instruction is received.

3. A terminal comprising:
a transmission unit that transmits a report on handover to a target base station, wherein
the transmission unit transmits the report when a result of monitoring a radio link, operating status of a timer or a radio quality during a handover exceeds a certain threshold.

4. A radio communication system including a terminal and radio base station:
the terminal comprises a transmission unit that sends a report about the handover to the target base station, and
a transmission unit that transmits a report on handover to a target base station, wherein
the transmission unit transmits the report including at least one of an identifier of a cell at handover destination, configuration for monitoring a radio link at a source base station, a result of the monitoring, and configuration for the handover, and
the radio base station comprises a reception unit that receives the report.

5. A radio communication system including a terminal and radio base station:
a transmission unit that transmits a report on handover to a target base station, wherein
the transmission unit transmits the report when a configuration for measurement, satisfying handover conditions, transmitting a measurement report, or a handover instruction is received, and
the radio base station comprises a reception unit that receives the report.

6. A radio communication system including a terminal and radio base station:
a transmission unit that transmits a report on handover to a target base station, wherein
the transmission unit transmits the report when a result of monitoring a radio link, operating status of a timer or a radio quality during a handover exceeds a certain threshold, and
the radio base station comprises a reception unit that receives the report.
